# EUROPÄISCHE PATENTSCHRIFT

(11) **EP 1 355 111 B1**
(45) Veröffentlichungstag und Bekanntmachung des Hinweises auf die Patenterteilung: **16.04.2014**
(21) Anmeldenummer: 03008990.8
(22) Anmeldetag: 17.04.2003
(51) Int. Cl.: F23C 99/00, F23L 15/02, F23L 15/04, F23C 9/00

(54) **Brenner mit seitlichem Austritt zur flammenlosen Oxidation**
Burner with lateral outlets for flameless oxidation
Brûleur à orifices latéraux pour la combustion sans flamme

(30) Priorität: 19.04.2002 DE 10217524
(43) Veröffentlichungstag der Anmeldung: 22.10.2003
(73) Patentinhaber: WS-Wärmeprozesstechnik GmbH, 71272 Renningen (DE)
(72) Erfinder: Wünning, Joachim G., 71229 Leonberg (DE); Wünning, Joachim A., 71229 Leonberg (DE)
(74) Vertreter: Rüger, Barthelt & Abel

(56) Entgegenhaltungen:
- EP-A- 0 463 218
- US-A- 3 749 548
- US-A1- 2002 015 932

## Beschreibung

Die Erfindung betrifft eine Vorrichtung zur flammenlosen Oxidation von Brennstoffen.

Die Beheizung von Ofenräumen mit Brennern, die zur flammenlosen Oxidation des Brennstoffs innerhalb des Ofenraums eingerichtet sind, ist bekannt. Brenner die einen Ofenraum mittels flammenloser Oxidation beheizen, haben bei vielen Anwendungsfällen wesentliche Vorteile gegenüber Brennern mit Flammenbildung. Die Wärmeerzeugung kann über einen größeren Bereich des Ofenraums verteilt werden und die Stickoxidbildung ist gering.

Die flammenlose Oxidation sowie ein dazu geeigneter Ofen sind der EP 0463218 B1 zu entnehmen. Zu dem Ofen gehört ein Ofenraum, in dessen Ofenwand ein oder mehrere Brenner angeordnet sind. Über die Brenner wird Brennstoff und Luft in den Ofenraum eingeleitet und Abgas ausgeleitet. Sie erzeugen ein Brennstoff-Luft-Gemisch, das in einem sich rechtwinklig zu der Ofenwand erstreckenden Strahl in den Ofenraum eingeblasen wird (Axialbrenner).

Diese Brenner eignen sich insbesondere zur Beheizung von Ofenräumen, bei denen der Raum vor dem Brenner frei ist, d.h. bei denen vor dem Brenner keine Gegenstände vorhanden sind, die von dem Brennstoff-Luft-Strahl getroffen werden können. Es besteht jedoch häufig der Wunsch, auch solche Ofenräume mit flammenlos arbeitenden Brennern zu beheizen, bei denen sich Gegenstände vor dem Brenner befinden oder aus sonstigen Gründen nicht mit axialem Brennstoffaustritt des Brenners gearbeitet werden kann. Hier werden häufig so genannte Flachflammenbrenner, Deckenstrahlbrenner oder Seitenwandbrenner eingesetzt. Diese arbeiten jedoch nicht mit flammenloser Oxidation, so dass die bekannten Nachteile, wie die Ausbildung lokaler, sehr heißer Zonen und eine hohe Stickoxidproduktion in Kauf genommen werden müssen.

Aus der US-A-3,749,548 ist eine Brennkammer zur flammenlosen Oxidation bekannt. Diese zylindrische Brennkammer weist an einem Ende einen Luft- und Brennstoffeinlass und an dem anderen Ende einen Heißgasauslass auf. In dem Brennstoffeinlass ist eine Brennstofflanze angeordnet, die von einer ringförmigen Lufteintrittsöffnung umgeben ist. Die Brennstofflanze lässt Brennstoffstrahlen schräg zu der Mittelachse der zylindrischen Brennkammer austreten.

In der Brennkammer bildet sich ein Wirbel, der die Verweildauer der Gase in der Brennkammer erhöht.

Es ist Aufgabe der Erfindung, eine Vorrichtung zur flammenlose Oxidation von Brennstoffen zu schaffen, die für Anwendungen mit niedriger Stickoxidproduktion geeignet ist und mit flammenloser Oxidation arbeitet, wobei sich Gegenstände vor dem Brenner befinden.

Diese Aufgabe wird mit der Vorrichtung nach Anspruch 1 gelöst:
Zu der erfindungsgemäßen Vorrichtung gehören ein Reaktionsraum mit Wand und wenigstens einem Brenner, der sich durch die Wand erstreckt und mit einem Brennerkopf versehen ist. Der Brennerkopf enthält einen Innenraum, der von vorgewärmter Luft oder einem Brennstoff-Luft-Gemisch durchströmt wird, das an der wenigstens einen in den Reaktionsraum führenden Austrittsöffnung in einem Strahl austritt. Die Austrittsöffnung legt eine zu der Wand geneigte oder parallele Austrittsrichtung fest. Damit werden die Luft, der Brennstoff oder das Brennstoff-Luft-Gemisch nicht rechtwinklig zu der Wand in den Reaktionsraum geführt, sondern in ein oder mehreren Strahlen von der Brennerachse weg. Gegenstände die in dem Reaktionsraum vor dem Brenner angeordnet sind, werden somit nicht von dem Brennstoff-Luft-Strahl getroffen. Der Reaktionsraum ist z.B. ein Ofenraum oder der Innenraum eines Strahlrohrs. Die Wand ist die Ofenwand oder das Strahlrohr.

Die Brennstoff- und Luftzuführung erfolgt im Wesentlichen drallfrei, d.h. in der Nähe des Brennerkopfs breiten sich die Luft, der Brennstoff oder das Brennstoff-Luft-Gemisch auf einzelnen Strahlen aus. Es hat sich gezeigt, dass diese Strahlen von einem quer dazu in den Abgaskanal hinein fließenden Abgasstrom nicht mitgenommen und auch nicht wesentlich gestört werden. Dies lässt sich erreichen, indem die Strömungsquerschnitte des Brennstoff-Luft-Gemischs und des Abgasstroms stark unterschiedlich festgelegt werden. Bei relativ hoher Brennstoff- und/oder Luftgeschwindigkeit ergibt sich eine vergleichsweise viel.niedrigere Abgasgeschwindigkeit. Der Brennstoff-Luft-Strom kann somit aus dem langsameren Abgasstrom Teile mitnehmen, sich mit diesem vermischen und flammenlos reagieren.

Der Abgaskanal, dessen Eintrittsöffnung in der Nähe des Brennerkopfs angeordnet ist, kann zudem bewirken, dass der Brennstoff-Luft-Strahl zu der Wand hin abgesenkt wird, so dass sich die Strömung an die Wand anlegt.

Die Eintrittsöffnung des Abgaskanals ist beispielsweise konzentrisch um den Brennerkopf herum angeordnet. Während die Eintrittsöffnung des Abgaskanals an der Wand abschließt, ragt der Brennerkopf etwas in den Reaktionsraum. Somit überqueren die Strahlen des Brennstoff-Luft-Gemischs die Eintrittsöffnung des Abgaskanals vor der Wand.

Die Eintrittsöffnung kann bedarfsweise in mehrere Teilöffnungen unterteilt sein. Beispielsweise ist es möglich, in der Eintrittöffnung Blenden vorzusehen, die die Abgasgeschwindigkeit in Nachbarschaft der Austrittsöffnungen des Brennerkopfs noch reduzieren.

Der Brennerkopf ist vorzugsweise so gestaltet, dass das Brennstoff-Luft-Gemisch an der Austrittsöffnung eine Geschwindigkeit annimmt, die ausreicht, eine etwaige Flamme fortzuspülen. Dadurch wird eine flammenlose Betriebsart ermöglicht, bei der die Reaktion von Brennstoff und Luft auf einen größeren Teil des Reaktionsraums verteilt wird. Außerdem saugt der Brennstoff-Luft-Strahl gerade in der Nähe der Eintrittsöffnung des Abgaskanals viel heißes Abgas an und reißt es mit, was ebenfalls den flammenlosen Betrieb unterstützt.

Der Brenner enthält vorzugsweise Mittel zur Vorwärmung des Brennstoffs, der Luft oder des Brennstoff-Luft-Gemischs, d.h. beispielsweise einen Rekuperator oder einen Regenerator. Dies ergibt eine gute Energieausnutzung und unterstützt die Ausbildung einer flammenlosen Oxidation.

Vorzugsweise ist der Brenner mit Mitteln zum Umschalten zwischen einer ersten und einer zweiten Betriebsart vorgesehen, wobei in der ersten Betriebsart teilweise innerhalb des Brennerkopfs eine Flamme ausgebildet wird. Diese Betriebsart kann zum Vorwärmen dienen. Stellenweise Überhitzungen des Reaktionsraums werden vermieden, weil die Flamme nur teilweise aus dem Brennerkopf austritt. Nach dem Aufwärmen kann in eine flammenlose Betriebsart (zweite Betriebsart) umgeschaltet werden. Diese vermeidet ein Überhitzen von Teilen des Reaktionsraums oder des Brennerkopfs aufgrund der großräumig verteilten Reaktion.

Die Umschaltung zwischen den Betriebsarten kann durch Änderung der Brennstoffzuführung, durch Änderung der Luft- oder Gasgeschwindigkeiten oder durch Verstellung von in den Innenraum des Brennerkopfs angeordneten Flammenhaltern erfolgen.

Weitere Einzelheiten vorteilhafter Ausführungsformen der Erfindung ergeben sich aus der Zeichnung, der nachfolgenden Beschreibung oder Unteransprüchen. In der Zeichnung sind Ausführungsbeispiele der Erfindung veranschaulicht. Es zeigen:
- Figur 1: einen Ofenraum mit Brenner mit nichtaxialem Strahlaustritt in schematischer Schnittdarstellung,
- Figur 2: den Brenner des Ofens nach Figur 1 in ausschnittsweiser schematisierter Darstellung,
- Figur 3: ein weiteres Ausführungsbeispiels eines Ofens mit mehreren nichtaxialen flammenlosen Brennern in schematisierter Schnittdarstellung,
- Figur 4: ein weiteres Ausführungsbeispiel eines Ofenraums mit nichtaxialem flammenlosen Brenner in Schnittdarstellung und
- Figur 5: einen mit einem Strahlrohr versehenen Brenner zur indirekten Beheizung eines Ofenraums mit flammenloser Oxidation in schematisierter Schnittdarstellung.

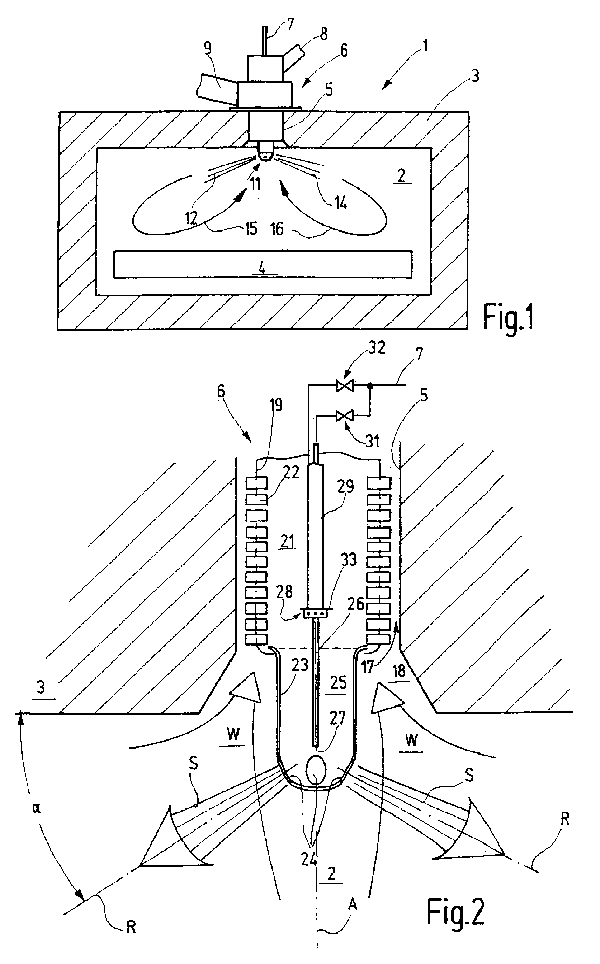

In Figur 1 ist ein Ofen 1 veranschaulicht, der eine einen Ofenraum 2 (der ein Reaktionsraum ist) umschließende Ofenwand 3 aufweist. In dem Ofenraum 2 ist wenigstens ein zu erwärmender Gegenstand 4 angeordnet. Beispielsweise an der Oberseite oberhalb des Gegenstands 4 weist die Ofenwand 3 eine Durchgangsöffnung 5 auf, die sich senkrecht zu der Ofenwand 3 durch diese hindurch erstreckt und in der ein Brenner 6 angeordnet ist. Dieser ist an eine Brennstoffleitung 7, eine Luftzuführungsleitung 8 und eine Abgasleitung 9 angeschlossen. Der Brenner 6 durchragt die Ofenwand 3 mit einem Brennerkopf 11, der ein oder mehrere Strahlen 12, 14, Brennstoff-Luft-Gemisch in den Ofenraum 2 bläst. Diese führen zu einer großräumigen Zirkulation, die in Figur 1 durch Pfeile 15, 16 veranschaulicht ist.

Der Brenner 6 ist in Figur 2 ausschnittsweise gesondert veranschaulicht. Zu dem Brenner 6 gehört ein außen von der Wandung der Durchgangsöffnung 5 begrenzter Abgaskanal 17, der bedarfsweise mit einer Auskleidung, z.B. aus Blech versehen sein kann und sich zu dem Ofenraum 2 hin z.B. trichterförmig erweitert. Die trichterförmige Erweiterung legt eine hier ringförmige Eintrittsöffnung 18 des Abgaskanals 17 fest.

In der Durchgangsöffnung 5 ist konzentrisch zu dieser ein den Abgaskanal 17 radial nach innen begrenzendes Rekuperatorrohr 19 mit Rippen 22 angeordnet, das einen an die Luftzuführungsleitung 8 angeschlossenen Luftkanal 21 begrenzt. Das Rekuperatorrohr 19 endet vor der Eintrittsöffnung 18 und trägt hier einen auswechselbaren Brennerkopf 23 z.B. aus Keramik. Der Brennerkopf 23 ist stirnseitig geschlossen, wobei er jedoch in der Nähe seines in den Ofenraum 2 ragenden Endes ein oder mehrere Austrittsöffnungen 24 aufweist. Diese sind von der Axialrichtung A abweichend orientiert, d.h. sie legen Austrittsrichtungen R fest, die im spitzen Winkel α zu der Ofenwand 3 oder parallel zu dieser orientiert sind. Für unterschiedliche Einsatzfälle können verschiedene Brennerköpfe bereitgehalten werden.

Durch den Luftkanal 21 hindurch bis in einen von dem Brennerkopf 23 umschlossenen Innenraum 25 hinein erstreckt sich ein Brennstoffrohr 26. Dieses kann, wie dargestellt, eine einzige stirnseitige Gasaustrittsöffnung 27 haben und somit einen axial in Richtung des geschlossenen Endes des Brennerkopfs 23 austretenden Gasstrahl erzeugen. Alternativ können an dem Ende des Brennstoffrohrs 26 ein oder mehrere Düsen angeordnet sein, die jeweils einen Gasstrom in Richtung der Austrittsöffnungen 24 erzeugen. Die Gasaustrittsöffnung 27 befindet sich in der Nähe der Austrittsöffnungen 24. Es können ein oder mehrere weitere Gasaustrittsöffnungen 28 vorgesehen sein, die einen größeren Abstand zu den Austrittsöffnungen 24 einhalten. Sie können beispielsweise auch außerhalb des Brennerkopfs 23 in dem Luftkanal 21 angeordnet und von einem eigenen Brennstoffrohr 29 versorgt sein. Vorzugsweise sind sie aber im Bereich der keramischen Brennkammer angeordnet. Die Brennstoffrohre 26, 29 sind beispielsweise über Ventile 31, 32 an die Brennstoffleitung 7 angeschlossen. In der Nähe der Gasaustrittsöffnungen 28 kann ein Flammenhalter 33 angeordnet sein. Der dem Brennstoffzuführungsmittel 26, 27; 28, 29 zugeordnete Flammenhalter 33 kann verstellbarer ausgebildet sein.

Der insoweit beschriebene Ofen 1 und der Brenner 6 arbeiten wie folgt:

Zur Inbetriebnahme (erste Betriebsart) wird über die Luftzuführungsleitung 8 Luft zugeführt und das Ventil 32 geöffnet. Das Ventil 31 bleibt geschlossen. Dadurch tritt Gas an den Gasaustrittsöffnungen 28 aus. Das Gas wird hier über eine nicht weiter veranschaulichte Zündeinrichtung gezündet. Eine sich ausbildende Flamme erwärmt den Brennerkopf 23 und tritt durch die Austrittsöffnungen 24 in den Ofenraum 2 aus. Anfallendes Abgas erwärmt den Ofenraum 2 und tritt durch den Abgaskanal 17 in die Abgasleitung 9 ein. Das ausströmende Abgas erwärmt über das Rekuperatorrohr 19 die zuströmende Frischluft im Gegenstrom. Damit nimmt die Temperatur in dem Ofenraum 2 allmählich zu. Außerdem nimmt die Luftvorwärmung immer mehr zu bis sie eine Temperatur von beispielsweise ungefähr 700° erreicht.

Ist der Ofenraum 2 ausreichend vorgewärmt, wird das Ventil 31 geöffnet und das Ventil 32 geschlossen. Das Gas strömt nun nur noch an der Gasaustrittsöffnung 27 aus. Der Brenner 6 gelangt dadurch in seine zweite Betriebsart. Bei dieser strömen aus den Austrittsöffnungen 24 Strahlen S bestehend aus Brennstoff-Luft-Gemisch in Richtung R mit einer Geschwindigkeit aus, die so groß ist, dass sich an dem Brennerkopf 23 und an den Austrittsöffnungen 24 keine Flamme aufhalten kann. Außerdem sind in der Nähe des Brennerkopfs 23 keinerlei Gegenstände angeordnet, die kleinräumige Wirbel erzeugen, zu einer Strömungsverlangsamung führen und somit als Flammenhalter dienen könnten. Vielmehr ist der Brennerkopf 23 außen glatt. Die Strahlen S erstrecken sich im Wesentlichen geradlinig und voneinander divergierend in den Ofenraum 2 hinein. Es bilden sich die in Figur 1 durch die Pfeile 15, 16 veranschaulichten großräumigen Wirbel aus, die Abgas mehrfach rezirkulieren lassen. Ein kleinerer Teil des Abgases findet an den Strahlen S vorbei, wie Figur 2 veranschaulicht, den Weg in die Eintrittsöffnung 18 des Abgaskanals 17. Dabei kreuzt der in den Abgaskanal 17 gelangende Teil des Abgases den Weg der Strahlen S. Der Weg des Abgases ist in Figur 2 durch Pfeile W markiert.

Durch die im Ofenraum 2 verteilte flammenlose Oxidation wird eine thermische Überlastung des Brennerkopfs 23 oder sonstiger in dem Ofenraum 2 vorhandener Teile vermieden.

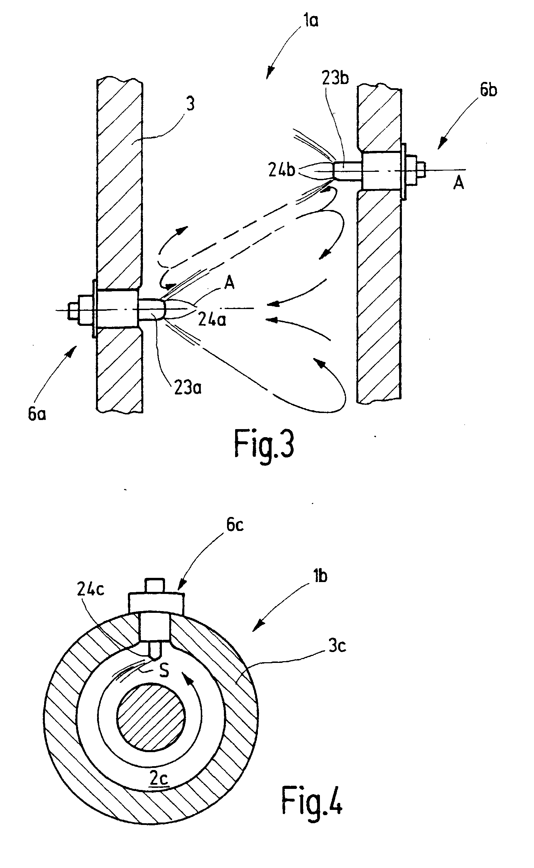

Figur 3 veranschaulicht eine abgewandelte Ausführungsform eines Ofens 1a, der mit mehreren z.B. baugleichen Brennern 6a, 6b bestückt ist. Diese sind an einander gegenüber liegenden Teilen der Ofenwand 3 beispielsweise jeweils zueinander versetzt angeordnet. Die Brenner 6a, 6b stimmen mit dem Brenner nach Figur 2 weitgehend überein. Es sind lediglich die Brennerköpfe 23a, 23b abweichend ausgebildet, indem die Austrittsöffnungen 24a, 24b in einem etwas steileren Winkel α von beispielsweise 45° oder 60° oder in einem anderen von der Axialrichtung A abweichenden Winkel zu der Ofenwand 3 orientiert sind. Es bildet sich das in Figur 3 veranschaulichte Strömungsmuster, das einen Betrieb mit flammenloser Oxidation gestattet.

Eine weitere Ausführungsform eines Ofens 1b ist Figur 4 zu entnehmen. Dieser weist einen runden Ofenraum 3c und einen Brenner 6c auf. Der Brenner 6c stimmt mit dem Brenner 6 nach Figur 2 mit Ausnahme des Brennerkopfs 23 überein. Dieser weist lediglich eine einzige Austrittsöffnung 24c auf, die den Brennstoff-Luft-Strahl S etwa in Umfangsrichtung des Ofenraums 2c austreten lässt. Die Gasströmung ist in Figur 4 durch einen Pfeil 34 angedeutet.

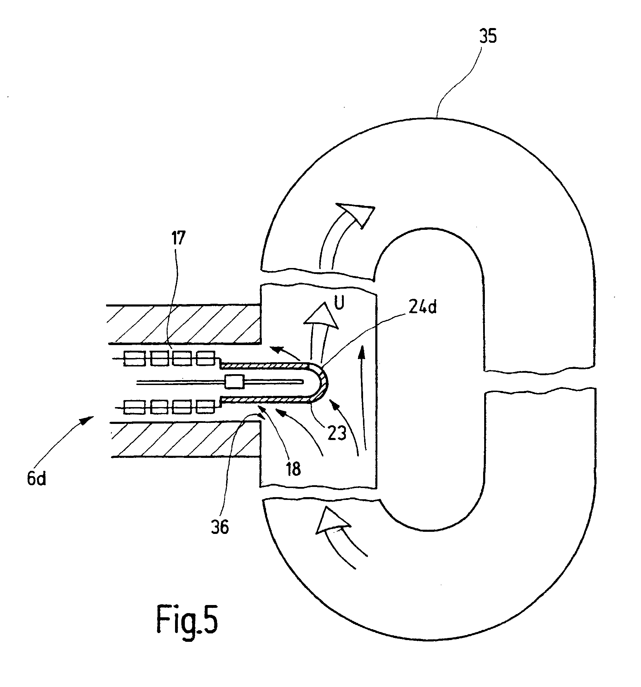

Das vorgestellte Prinzip eines flammenlosen Brenners mit nicht axial austretendem Brennstoff-Luft-Strahl kann auch zur Beheizung von Strahlrohren Anwendung finden. Figur 5 veranschaulicht ein Ausführungsbeispiel, bei dem ein ringförmiges geschlossenes Strahlrohr 35 von einem Brenner 6d beheizt wird. Der Innenraum des Strahlrohrs 35 bildet, wie zuvor der Ofenraum 2, einen Reaktionsraum. Der Brenner 6d stimmt weitgehend mit dem Brenner 6 nach Figur 2 überein. Der Brennerkopf 23 weist jedoch nur eine einzige Austrittsöffnung 24d auf, die etwa radial und somit parallel zu der durch das Strahlrohr 35 gebildeten Wand orientiert ist. Das Strahlrohr 35 weist eine Öffnung 36 auf, an die der Brenner 6d angeschlossen ist. Die Öffnung 36 dient somit sowohl der Luftund Brennstoffzufuhr als auch der Abgasabfuhr. Die Eintrittsöffnung 18 des Abgaskanals 17 schließt unmittelbar an die Öffnung 36 an. Die Öffnungsrichtung der Austrittsöffnung 24 stimmt mit der Umlaufrichtung U in dem Strahlrohr 35 überein. Die Umlaufrichtung U wird im Wesentlichen durch die Strahlrohrmittelachse festgelegt. Die Austrittsöffnung 24d ist vorzugsweise auf dieser Strahlrohrmittelachse angeordnet. In Betrieb glüht das Strahlrohr 35. In seinem Inneren wird eine Strömung aufrecht erhalten, die z.B. zwei- oder dreimal so groß ist wie der durch den Abgaskanal 17 austretende Stoffstrom. Es kann sich flammenlose Oxidation einstellen.

Eine Vorrichtung zur flammenlosen Oxidation von Brennstoffen weist einen Reaktionsraum 2 auf, der von einem Brenner 6 mit einem Brennstoff-Luft-Gemisch gespeist wird. Der Brenner 6 gibt den Brennstoff-Luft-Strahl quer zu seiner Längsachse A ab. In oder an dem Brenner ist konzentrisch oder parallel zu der Brennerlängsachse A ein Abgaskanal 17 angeordnet. Die Austrittsrichtung R des Brenners und die Richtung A des Abgaskanals kreuzen einander. Dies ergibt Brenner, die Brennstoff parallel oder geneigt zur Ofenwand in den Ofenraum einführen und zu einer flammenlosen Oxidation des Brennstoffs eingerichtet sind.

## Patentansprüche

1. Vorrichtung (1) zur flammenlosen Oxidation von Brennstoffen,
mit einem Reaktionsraum (2), der eine Wand (3) aufweist,
mit wenigstens einem Brenner (6), der einen sich durch die Wand (3) erstreckenden Abschnitt und einen Brennerkopf (23) aufweist, der wenigstens eine in den Reaktionsraum (2) führende Austrittsöffnung (24) aufweist,
mit einem Abgaskanal (17), der eine Eintrittsöffnung (18) aufweist, die in der Nähe des Brennerkopfs (23) angeordnet ist, **dadurch gekennzeichnet, dass** die Austrittsöffnung eine zu der Wand (3) geneigte oder parallele Austrittsrichtung (R) festlegt.

2. Vorrichtung nach Anspruch 1, **dadurch gekennzeichnet, dass** die Eintrittsöffnung (18) des Abgaskanals (17) den Brennerkopf (23) konzentrisch umgibt.

3. Vorrichtung nach Anspruch 1, **dadurch gekennzeichnet, dass** die Eintrittsöffnung (18) in mehrere Teilöffnungen unterteilt ist.

4. Vorrichtung nach Anspruch 1, **dadurch gekennzeichnet, dass** der Brennerkopf (23) so gestaltet ist, dass das Brennstoff/Luft-Gemisch zumindest in der flammenlosen Betriebsart an der Austrittsöffnung (24) eine Geschwindigkeit annimmt, die ausreicht, eine Flamme fortzuspülen.

5. Vorrichtung nach Anspruch 1, **dadurch gekennzeichnet, dass** der Brenner (6) Mittel (19) zur Erzeugung eines vorgewärmten Brennstoff/Luft-Gemischs enthält.

6. Vorrichtung nach Anspruch 5, **dadurch gekennzeichnet, dass** der Brenner (6) ein Rekuperatorbrenner ist.

7. Vorrichtung nach Anspruch 5, **dadurch gekennzeichnet, dass** der Brenner (6) ein Regeneratorbrenner ist.

8. Vorrichtung nach Anspruch 1, **dadurch gekennzeichnet, dass** der Brennerkopf (23) einen Innenraum (25) umschließt, der mit einem Brennstoffzuführungsmittel (26) und mit einem Luftzuführungsmittel (21) verbunden ist.

9. Vorrichtung nach Anspruch 1, **dadurch gekennzeichnet, dass** Mitteln (31, 32) zum Umschalten des Brenners (6) von einer ersten Betriebsart, bei der sich eine wenigstens zum Teil innerhalb des Brennerkopfs (23) brennende Flamme ausbildet, in eine zweite Betriebsart vorgesehen sind, bei der aus der Austrittsöffnung (24) ein Brennstoff/Luft-Gemisch ohne Ausbildung einer Flamme austritt.

10. Vorrichtung nach Anspruch 9, **dadurch gekennzeichnet, dass** das Brennstoffzuführungsmittel (26, 27; 28, 29) zur Umschaltung der Betriebsarten umschaltbar oder verstellbar ausgebildet ist.

11. Vorrichtung nach Anspruch 9, **dadurch gekennzeichnet, dass** das Brennstoffzuführungsmittel (26, 27; 28, 29) mehrere wahlweise aktivierbare Brennstoffaustrittsöffnungen (27, 28) aufweist, die in unterschiedlichen Abständen zu der Austrittsöffnung (24) angeordnet sind.

12. Vorrichtung nach Anspruch 1, **dadurch gekennzeichnet, dass** dem Brennstoffzuführungsmittel (26, 27; 28, 29) ein verstellbarer Flammenhalter (33) zugeordnet ist.

## Claims

1. Device (1) for the flameless oxidation of fuels,
with a reaction chamber (2), which has a wall (3),
with at least one burner (6), which has a section extending through the wall (3) and a burner head (23), which has at least one outlet (24) leading into the reaction chamber (2),
with a waste gas duct (17), which has an inlet (18) arranged in the vicinity of the burner head (23),
**characterised in that** the outlet defines a discharge direction (R) inclined or parallel to the wall (3).

2. Device according to claim 1, **characterised in that** the inlet (18) of the waste gas duct (17) surrounds the burner head (23) concentrically.

3. Device according to claim 1, **characterised in that** the inlet (18) is divided into multiple part-openings.

4. Device according to claim 1, **characterised in that** the burner head (23) is configured so that at least in the flameless mode of operation the fuel/air mixture assumes a speed at the outlet (24) that is sufficient to flush away a flame.

5. Device according to claim 1, **characterised in that** the burner (6) includes elements (19) for generating a preheated fuel/air mixture.

6. Device according to claim 5, **characterised in that** the burner (6) is a recuperator burner.

7. Device according to claim 5, **characterised in that** the burner (6) is a regenerative burner.

8. Device according to claim 1, **characterised in that** the burner head (23) encloses an interior (25), which is connected to a fuel supply element (26) and to an air supply element (21).

9. Device according to claim 1, **characterised in that** elements (31, 32) for switching over the burner (6) from a first mode of operation, in which a flame burning at least partially within the burner head (23) is formed, into a second mode of operation, in which a fuel/air mixture exits from the outlet (24) without the formation of a flame.

10. Device according to claim 9, **characterised in that** the fuel supply element (26, 27; 28, 29) is configured to be reversible or adjustable to switch over the modes of operation.

11. Device according to claim 9, **characterised in that** the fuel supply element (26, 27; 28, 29) has selectively activatable fuel outlets (27, 28), which are arranged at different distances from the outlet (24).

12. Device according to claim 1, **characterised in that** the fuel supply element (26, 27; 28, 29) has an associated adjustable flame retainer (33).

## Revendications

1. Dispositif (1) de combustion de combustibles sans flamme,
comprenant une chambre de réaction (2) qui présente une paroi (3),
comprenant au moins un brûleur (6) qui présente une partie s'étendant à travers la paroi (3), et une tête de brûleur (23) qui comporte au moins un orifice de sortie (24) menant dans la chambre de réaction (2),
comprenant un canal d'évacuation des gaz brûlés (17) qui présente une ouverture d'entrée (18) disposée à proximité de la tête de brûleur (23), **caractérisé en ce que** l'orifice de sortie définit une direction de sortie (R) inclinée en direction de la paroi (3) ou parallèle à celle-ci.

2. Dispositif selon la revendication 1, **caractérisé en ce que** l'ouverture d'entrée (18) du canal d'évacuation des gaz brûlés (17) entoure la tête de brûleur (23) de façon concentrique.

3. Dispositif selon la revendication 1, **caractérisé en ce que** l'ouverture d'entrée (18) est subdivisée en plusieurs ouvertures élémentaires.

4. Dispositif selon la revendication 1, **caractérisé en ce que** la tête de brûleur (23) est agencée de manière telle que le mélange combustible/air adopte, au moins en mode de fonctionnement sans flamme, une vitesse à l'orifice de sortie (24), qui est suffisante pour chasser une flamme.

5. Dispositif selon la revendication 1, **caractérisé en ce que** le brûleur (6) comporte des moyens (19) destinés à générer un mélange combustible/air préchauffé.

6. Dispositif selon la revendication 5, **caractérisé en ce que** le brûleur (6) est un brûleur à récupération.

7. Dispositif selon la revendication 5, **caractérisé en ce que** le brûleur (6) est un brûleur à régénération.

8. Dispositif selon la revendication 1, **caractérisé en ce que** la tête de brûleur (23) entoure un volume intérieur (25) qui est relié à un moyen d'alimentation en combustible (26) et à un moyen d'alimentation en air (21).

9. Dispositif selon la revendication 1, **caractérisé en ce qu'**il est prévu des moyens (31, 32) destinés à commuter le brûleur (6) d'un premier mode de fonctionnement, dans lequel se forme une flamme qui brûle au moins en partie à l'intérieur de la tête de brûleur (23), à un deuxième mode de fonctionnement dans lequel un mélange combustible/air sort de l'orifice de sortie (24) sans formation de flamme.

10. Dispositif selon la revendication 9, **caractérisé en ce que** le moyen d'alimentation en combustible (26, 27; 28, 29) est réalisé avec possibilité de commutation ou de réglage, en vue de la commutation des modes de fonctionnement.

11. Dispositif selon la revendication 9, **caractérisé en ce que** le moyen d'alimentation en combustible (26, 27; 28, 29) comporte plusieurs orifices de sortie de combustible (27, 28) qui peuvent être activés au choix et sont disposés à des distances différentes par rapport à l'orifice de sortie (24).

12. Dispositif selon la revendication 1, **caractérisé en ce qu'**un stabilisateur de flamme (33) réglable est associé au moyen d'alimentation en combustible (26, 27; 28, 29).
